(19) Europäisches Patentamt
European Patent Office
Office européen des brevets

(11) **EP 3 537 373 A1**

(12) # EUROPEAN PATENT APPLICATION

(43) Date of publication:
**11.09.2019 Bulletin 2019/37**

(51) Int Cl.:
**G06T 5/00** (2006.01)  **G06T 11/00** (2006.01)
**G06T 15/04** (2011.01)

(21) Application number: **18305236.4**

(22) Date of filing: **07.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Novaquark**
**75015 Paris (FR)**

(72) Inventor: **GRIS, Guillaume**
**75015 PARIS (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **NON-LOCAL COMPUTATION OF GRADIENT NOISE FOR COMPUTER-GENERATED DIGITAL IMAGES**

(57) This invention relates to a method for transforming a digital image comprising applying a procedural noise onto a parameter of an image element of said digital image, comprising
- determining a range of the lattice (L) of said noise, comprising said image element;
- for each noise vertex (S) of said lattice within said range, determining a gradient value G(S) as a pseudorandom value, and add to the parameter associated with each image vertex (P) of said image element within a neighbourhood of said vertex, a contribution depending on said gradient value, and on the relative positions of said image vertex and noise vertex..

**Fig. 1**

**Description**

FIELD OF THE INVENTION

The present invention is related to an improvement for the computation of procedural noise. More specifically, it aims in reducing the computing time for generating gradient noise onto a parameter of an element within a computer-generated digital image.

BACKGROUND OF THE INVENTION

Procedural noise is widely used in the computer graphics field in order to provide rich details to synthetic images. In general, a generated noise is applied to one (or several) parameter of an image element, so as to "deform" its visual aspect.

The parameter can be a colorimetric parameter so as to provide the element with a noisy texture; or it can be a geometrical parameter, so as to generate an altitude map to an originally flat element and thereby create a realistic landscape. Several other applications of parametric noise are also possible.

The word "procedural" means that the noise is generated by a program code implementing a parametric function. Such a noise opposes to noise hardcoded as a data structure, and allows a more compact footprint in terms of required memory space: a few kilobytes are sufficient to encode a procedural noise. Procedural noises have also further advantages. A. Lagae et al., "State of the Art in Procedural Noise function" in Eurographics 2010 lists some of these advantages and presents further the principles of procedural noise functions.

Among parametric noise functions, a very well-known and common approach is the Perlin noise. Perlin noise consists in generating gradient values at vertices of a noise lattice and interpolating these gradient values for vertices of the image objects within any hypercube of the noise lattice.

Perlin noise is widely described in the literature. Among other sources, one can refer to the US patent US 6,867,776, to the basic articles of Ken Perlin, or to the article "Simplex noise demystified" of Stefan Gustavson.

As stated by this article, "a fundamental problem of classic noise is that it involves sequential interpolations among each dimension. Apart from the rapid increase in computation complexity as we move to higher dimensions, it becomes more and more a problem to compute the analytic derivative of the interpolated function."

Ken Perlin has then proposed an improvement to this first method, called "Simplex noise".

Perlin noise is $O(n \times 2^n)$, wherein n is the dimension, but Simplex noise is $O(n^2)$ making it polynomial time, and scalable with the dimension.

The main acknowledged weakness of Perlin noise is that it uses a hypercube as a grid. In a given n dimension, this equates to $2^n$ corners for each vertex of the image element to consider. In addition, the interpolation of the gradient values should then be performed by pairs, meaning that for each vertex, $2^n$-1 linear interpolations.

Simplex noise addresses this issue by considering simplexes instead of hypercubes. Simplex is the geometrical shape with the fewest corners in a given dimension, i.e. n+1 corners, where n is the dimension.

Furthermore, no linear interpolations are needed but only radial attenuations for weighting the impact of the gradient of each vertices of the noise lattice on a given vertex. Only n+1 attenuations are required.

However, still, the existing algorithms implementing the generation of simplex noise are not efficient enough and produce an important computing overhead. This overhead may become blocking for some applications requiring massive noise computation.

SUMMARY OF THE INVENTION

Aims of the present invention comprise to alleviate at least partly the above mentioned drawbacks. More particularly, the invention aims to further improve the performance of the noise computation

This objective is achieved with a method for transforming a digital image comprising applying a procedural noise onto a parameter of an image element of said digital image, comprising

-   determining a range of the lattice of said noise, comprising said image element;
-   for each noise vertex of said lattice within said range, determining a gradient value as a pseudorandom value, and add to the parameter associated with each image vertex of said image element within a neighbourhood of said vertex, a contribution depending on said gradient value, and on the relative positions of said image vertex and noise vertex.

Preferred embodiments comprise one or more of the following features, which can be taken separately or together, either in partial combination or in full combination.

-   said gradient value depends only on the coordinates of said noise vertex;
-   said parameter is a geometrical parameter of said image vertex;
-   said parameter is a colorimetric parameter of said image vertex, so as to create a noisy texture for said image element;
-   said neighbourhood is a radially-symmetric area centred around said noise vertex, with a radius inferior to the period of said lattice;
-   said contribution is determined by a function of said gradient value, and of the coordinates of said image vertex and said noise vertex, which is null for outside said neighbourhood, and decreasing within said neighbourhood with the distance between said noise vertex and said image vertex;

- the derivative of said function is null at said radius from said noise vertex;
- said noise is a Perlin noise;
- said noise is a simplex noise;
- a linear application is used to transform the coordinates of said noise vertex and said image vertex between said lattice and another lattice associated with said image element.

Further features and advantages of the invention will appear from the following description of embodiments of the invention, given as nonlimiting examples, with reference to the accompanying drawings listed hereunder.

BRIEF DESCRIPTION OF THE DRAWINGS

Figure 1 illustrates a trivial 2D example wherein a simplex noise lattice and an image element are depicted, for explaining an embodiment of the invention.
Figure 2 illustrates another embodiment on classic Simplex noise.

DETAILED DESCRIPTION OF THE INVENTION

The invention allows to transform a digital image by applying a procedural noise onto a parameter of an image element within said digital element.

According to some embodiments, the invention may help generating a digital image, taking as inputs some image elements provided by other software algorithms: for example, an image representing a landscape can be generated by only applying the noise generation algorithm of the invention and by specifying some further parameters (size of the image, etc.). Such a generalized application of the invention would be considered in the wording "to transform" as these further parameters may be considered as a model of an input image to be transformed.

Typically, elements within a digital image are defined by a set of vertices, each of them being defined by a vector of coordinates. According to a embodiment of the invention, the procedural noise may be applied onto the coordinates of the vertices so as to deform the original shape of the image element. A typical example consists in starting with a flat image element, and in building an artificial landscape solely determined by the procedure noise that is applied to it.

The image elements may also have some colorimetric parameters onto which the procedural noise can be applied, so as to provide them with a more realistic texture.

Other embodiments are possible. In the following, the invention will be described more particularly in connection with the generation of artificial landscape, without any loss of generality.

In a similar way, the invention applies particularly well to the computation of simplex noise, but it can also apply to other types of procedural noise, including "classic" Perlin noise. However, without any loss of generality, the invention will be more specifically described in connection to its embodiment for Simplex noise.

Computing a simplex noise implies defining a lattice for the noise, which is "mapped" onto the image element on which one wants to apply a noise.

This noise lattice can be seen as a n-dimension tessellation, as explained for instance in the wikipedia site: https://en.wikipedia.org/wiki/Tessellation_(computer_graphics), made of a set of simplices (or simplexes, both words existing). Accordingly, each vertex of the image element falls within one and only one simplex of the tessellation.

This noise lattice has a lower frequency than the lattice associated with the image element, so that, in general, many vertexes of the image element falls within a given simplex.

One reminds that a simplex is the most regular geometrical shape having a minimum number of vertices for a given dimension. In the typical example of a 2-dimension (2D) space, the corresponding simplex is an equilateral triangle, i.e. a shape with 3 vertices and with equal edges.

In general terms, the Simplex algorithm, like any other procedural gradient noise function, consists in determining a gradient for each vertex of the noise lattice. Then, based on these gradient values, the noise can be computed at each vertex of the image element.

In a first step, a range of the noise lattice is determined to contain the image element. Preferably, this range, $R_{noise}$ is determined so as to be the smallest range encapsulating this image element, in order to avoid unnecessary computing. In a 2D or 3D case, this range $R_{noise}$ may define a simple encapsulating square or cube, respectively.

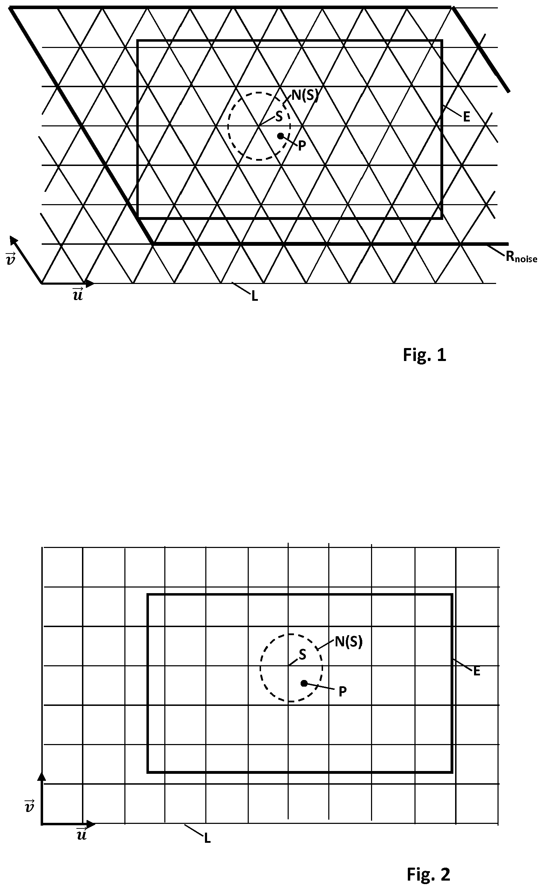

Figure 1 illustrates a trivial 2D example wherein a simplex noise lattice L and an image element E are depicted. A frame $\overset{\nu}{u}, \overset{\omega}{v}$ is associated to the noise lattice L. The range $R_{noise}$ is in this case a 2D range defining a quadrilateral in the noise lattice L surrounding the image element E. Such a quadrilateral (in the noise lattice) is depicted in bold on figure 1.

Then, for each vertex S of the noise lattice within the range $R_{noise}$, a gradient value G(S) is determined. The gradient value is a pseudo-random value, typically a vector of the same dimension n than the vertices of the image element (here, 2-dimensional). This value is determined only by the coordinates of the vertex, so that its value will be the same each time it is computed for a given vertex: such a characteristic enables the noise (and thus the resulting landscape, or texture...) to be deterministic (i.e. the same when viewed at different time, or by different users).

The actual computation of a pseudo-random gradient value lies beyond the scope of the present invention and is well-known in the art, and widely discussed e.g. in the literature relating to Perlin noise and simplex noise.

Once a gradient value is determined, it is propagated to the vertices P of the image element E.

More precisely, one adds to a parameter associated with each vertex P of said image element E within a neighbourhood N(S) of this noise vertex S, a contribution f(S, G(S), P) that depends on the gradient value G(S), and on the relative positions between the noise vertex and the image vertex P. This relative position may be fully or partly represented by the distance between the both vertices S, P.

As already mentioned here-above, the parameter can be a colorimetric parameter, or a geometric parameter (like an altitude to build a 2D landscape).

In other words, for each vertex P of the image elements, the related parameter receives a contribution from several vertices, according to the neighbourhoods N(S). These contributions are simply added (or "accumulated"), so that, when all the vertices have provided their respective contribution, the value accumulated so far for the parameter can be considered as the final parameter value.

The "propagation" of a gradient value G(S) of a noise vertex is limited to the neighbourhood N(S) of this vertex S. The neighbourhood N(S) are determined by a threshold value, so that when the distance between an image vertex P and the noise vertex S is above r, the contribution is made to zero. This neighbourhood can be a radially-symmetric area centred around the respective vertex and with a radius equal to this threshold r.

Preferentially, the threshold value r is set so as to be below the distance between two adjacent vertices of the noise lattice (i.e. inferior to the minimal height of the simplex), so as to ensure than any image vertex uses contributions from d+1 noise vertices at most in dimension d.

The neighbourhood N(S) of a vertex S of the noise lattice is depicted by a dotted circle on figure 1.

Accordingly, each vertex of the image element receives a contribution of only the vertices of the simplex in which it is located, i.e. N+1 contributions wherein N is the number of dimensions. In the example of figure 1, each vertex P of the image element E receives a contribution of 3 vertices. Thus, the noise value at each image vertex can always be calculated as the sum of three terms.

Due to this limited range wherein the contribution function is not null, the inventors have realized that it becomes interesting, in terms of computing complexity, to deploy a non-local computing of the parameter value at each vertex of the image. According to the invention, then, the classic Simplex algorithm is somehow "reversed" by considering first the noise vertices and for each of them applying their contribution to their neighbourhood. Once this treatment is made for all the vertices, the final accumulated values provide the resulting noised image element.

The contribution function f aims in attenuating the gradient value G(S) according to the position of the image vertex with regard to the noise vertex S, notably according to its distance to this noise vertex S. In general, the contribution f can be computed as a scalar product between the vector PS and G(S). According to an embodiment, it can be a decreasing function with d, where d is the distance between the vertex P and the noise vertex S. for which the value equals to its maximum at P=S (d=0).

Preferably, this function f is set so that its values becomes zero when d=r. This allows avoiding any discontinuities between the values provided by the function f and the forced 0 value outside of the neighbourhood N(S). Preferably also, the function f is set so that its derivative is also equal to zero when d=r.

The vertices of the image element E are defined according to a lattice associated with the image itself. The noise lattice L is decorrelated and not aligned with this image lattice, since based on simplexes whereas the image lattice is based on hypercubes.

The image lattice is not represented on FIG. 1, for clarity of the depiction, but one can easily figure out that the image vertex P is defined by coordinates (x, y) determined along horizontal and vertical axis. Furthermore, the frequency of this image lattice is not related to the noise lattice (and is typically much higher).

Consequently, a change of basis is required to determine the set of vertices P of the image element E to which the contribution of a noise vertex S applies.

Such change of basis is widely discussed in the literature related to classic simplex noise algorithms. The here-above mentioned article of Stefan Gustavson, "Simplex noise demystified" proposes a source code implementing the computation of simplex noise, including this aspect relating to change of basis between noise and image lattices.

In the general case, the change of basis can be considered as a matrix product. In the 2D case, the terms of the matrix are made of sines and cosines, so that the overall computation may be demanding for the computing resources. Accordingly, the change of basis is usually approximated by a linear application, based on an NxN matrix having a form like:

$$\begin{pmatrix} K+1 & \Lambda & K \\ M & O & M \\ K+1 & \Lambda & K+1 \end{pmatrix}$$

This approximation presents at least two advantages.

First, the coordinates (x', y'...z') in the new basis can be computed easily from the coordinates in the former basis by the system:

$$\begin{cases} x' = x + K(x + y + \text{K} + z) \\ y' = y + K(x + y + \text{K} + z) \\ \quad\quad \text{M} \\ z' = z + K(x + y + \text{K} + z) \end{cases}$$

Computing a single product K(x+y...+z) allows the compute all the coordinates by a simple sum. On the computing point of view, such a transform is very efficient.

Second, the inverse transform, allowing the reverse change of basis, can be easily deduced, and is a linear application based on an NxN matrix of the form:

$$\begin{pmatrix} 1 - C & \cdots & -C \\ \vdots & \ddots & \vdots \\ -C & \cdots & 1 - C \end{pmatrix}$$

$$C = \frac{K}{1 + 2K}$$

wherein

Ken Perlin proposed several values of K, allowing good approximation of the change of basis, according to the dimension N:

| N | K |
|---|---|
| 2 | $\dfrac{\sqrt{3}-1}{2}$ |
| 3 | $\dfrac{1}{3}$ |
| ... | ... |
| N | $\dfrac{\sqrt{N+1}-1}{N}$ |

By applying these approximation, it is then possible to expresses the noise vertices S and the image vertices P in the frame of any of the noise lattice L or image lattice.

Other approximations are also possible, including non-linear ones. Some related embodiments are for instance based on OpenSimplex, as discussed on http://en.wikipedia.org/wiki/OpenSimplex_noise

It becomes then feasible to determine the set of image vertices P within the neighbourhood N(S) of a vertex S of the noise lattice L.

Then, on can perform a traversal of all the vertices S of the range $R_{noise}$ which has previously be determined. For all these vertex S, the gradient G(S) is determined, and for all image vertex P of the neighbourhood N(S), the contribution of this gradient G(S) is determined on the basis of the relative positions of the considered image vertex P and the considered noise vertex S. This contribution is added to an accumulative parameter value associated with this image vertex P.

According to an embodiment of the invention, during the traversal of the vertices S of the noise lattice L within the range $R_{noise}$, a further test is implemented to check whether the considered vertex S is close enough to the image element. Due to the skew of the noise lattice L with regard to the image lattice, there may be some zone of the noise lattice, at its extremity, wherein the vertices are too far from the image element E to influence the noise of its vertices, since the influence is limited to a neighbourhood. According to this test, noise vertices S too far from the image element are simply discarded in the computation

This test implies a small overhead but this test is a simple one and lies out the loop on the vertices of the image element E. Accordingly, this overhead is considered reasonable and decreases with higher sampling frequency and dimension.

On figure 2, an embodiment of the invention for classic Perlin noise is depicted.

In a similar way to the embodiment previously described in connection with simplex noise, a gradient is determined for each noise vertex of the lattice L, as a pseudo-random value. A contribution is added to the considered parameter (colour, height...) associated with all image vertexes P of the image element E inside a neighbourhood N(S) of the noise vertex S. This contribution is based on the gradient G(S) at this noise vertex S and on the relative positions of the vertices S and P.

However, looking at figure 2, one can verify that for a same image vertex P, 4 contributions will be added, corresponding with the 4 corners of the square of the lattice L within which falls the image vertex P.

Compared with the classic simplex or Perlin noise algorithms, the gain is considered as substantial because the gradient G(S) of each vertex S is computed only once. Such an arrangement is made possible because of the additive nature of the contribution f() of the gradient values on each image vertex P and because of limited neighbourhood N(S).

The loop on the image vertices P of a neighbourhood only comprises addition and very friendly computation with respect to caching, branch predictor and vectorization.

The inventors have then determined that it was more efficient, in terms of computing complexity, to perform a non-local computation of the noise, i.e. by not determining this noise locally, i.e. vertex by vertex, as with the classical algorithm.

According to the invention, it becomes more efficient to apply a procedural noise (e.g. Simplex noise) onto a parameter of vertices of an image element, so as to transform a digital image, and to provide it some noisy aspects.

The invention has been described with reference to preferred embodiments. However, many variations are possible within the scope of the invention.

**Claims**

1. Method for transforming a digital image comprising applying a procedural noise onto a parameter of an image element of said digital image, comprising

    - determining a range of the lattice (L) of said noise, comprising said image element;
    - for each noise vertex (S) of said lattice within said range, determining a gradient value G(S) as a pseudorandom value, and add to the parameter associated with each image vertex (P) of said image element within a neighbourhood of said vertex, a contribution depending on said gradient value, and on the relative positions of said image vertex and noise vertex.

2. Method according to the previous claim, wherein said gradient value depends only on the coordinates of said noise vertex.

3. Method according to any of the previous claims, wherein said parameter is a geometrical parameter of said image vertex (P).

4. Method according to any of the claims 1 to 3, wherein said parameter is a colorimetric parameter of said image vertex (P), so as to create a noisy texture for said image element (E).

5. Method according to any of the previous claims, wherein said neighbourhood (N(S)) is a radially-symmetric area centred around said noise vertex (S), with a radius inferior to the period of said lattice.

6. Method according to any of the previous claims, wherein said contribution is determined by a function of said gradient value, and of the coordinates of said image vertex and said noise vertex, which is null for outside said neighbourhood, and decreasing within said neighbourhood with the distance between said noise vertex (S) and said image vertex (P).

7. Method according to the previous claim, wherein the derivative of said function is null at said radius from said noise vertex (S).

8. Method according to any of the previous claims, wherein said noise is a Perlin noise.

9. Method according to any of the claims 1 to 7, wherein said noise is a simplex noise.

10. Method according to the previous claim, wherein a linear application is used to transform the coordinates of said noise vertex and said image vertex between said lattice and another lattice associated with said image element.

**Fig. 1**

**Fig. 2**

Europäisches
Patentamt

European
Patent Office

Office européen
des brevets

# EUROPEAN SEARCH REPORT

Application Number

EP 18 30 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MUSGRAVE F K ET AL: "The synthesis and rendering of eroded fractal terrains", COMPUTER GRAPHICS, ACM, US, vol. 23, no. 3, July 1989 (1989-07), pages 41-50, XP058214754, ISSN: 0097-8930, DOI: 10.1145/74334.74337 * the whole document * | 1-10 | INV. G06T5/00 G06T11/00 G06T15/04 |
| A | ANDY G YE ET AL: "Procedural texture mapping on FPGAs", ACM/SIGDA INTERNATIONAL SYMPOSIUM ON FIELD PROGRAMMABLE GATE ARRAYS. FPGA '99. MONTEREY, CA, FEBRUARY 21 - 23, 1999; [ACM/SIGDA INTERNATIONAL SYMPOSIUM ON FIELD PROGRAMMABLE GATE ARRAYS], NEW YORK, NY : ACM, US, February 1999 (1999-02), pages 112-120, XP058206968, DOI: 10.1145/296399.296438 ISBN: 978-1-58113-088-1 * the whole document * | 1-10 | |
| A | FABRICE NEYRET ED - SPENCER S N (ED): "Advected textures", COMPUTER ANIMATION; [ACM SIGGRAPH SYMPOSIUM ON COMPUTER ANIMATION], EUROGRAPHICS ASSOCIATION, P. O. BOX 16 AIRE-LA-VILLE CH-1288 SWITZERLAND, 26 July 2003 (2003-07-26), pages 147-153, XP058394929, ISSN: 1727-5288 ISBN: 978-1-58113-659-3 * the whole document * | 1-10 | TECHNICAL FIELDS SEARCHED (IPC)  G06T |

-/--

The present search report has been drawn up for all claims

| Place of search | Date of completion of the search | Examiner |
|---|---|---|
| Munich | 1 October 2018 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/170696 A1 (AHN JEONGHWAN [KR] ET AL) 3 August 2006 (2006-08-03)<br>* figures 1,20,21 *<br>* paragraph [0039] - paragraph [0043] *<br>* paragraph [0128] - paragraph [0137] *<br>----- | 1-10 | |
| A | ARES LAGAE ET AL: "Procedural noise using sparse Gabor convolution",<br>ACM TRANSACTIONS ON GRAPHICS (TOG), ACM, US,<br>vol. 28, no. 3, 27 July 2009 (2009-07-27), pages 1-10, XP058145376,<br>ISSN: 0730-0301, DOI: 10.1145/1531326.1531360<br>* the whole document *<br>----- | 1-10 | |

TECHNICAL FIELDS
SEARCHED      (IPC)

The present search report has been drawn up for all claims

| Place of search | Date of completion of the search | Examiner |
|---|---|---|
| Munich | 1 October 2018 | Herter, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 30 5236

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2018

| Patent document cited in search report | Publication date | Patent family member(s) | Publication date |
|---|---|---|---|
| US 2006170696 A1 | 03-08-2006 | KR 20060087139 A<br>US 2006170696 A1 | 02-08-2006<br>03-08-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6867776 B

**Non-patent literature cited in the description**

- **A. LAGAE et al.** State of the Art in Procedural Noise function. *Eurographics,* 2010